# FASCICULE DE BREVET EUROPEEN

(11) **EP 2 011 200 B1**
(45) Date de publication et mention de la délivrance du brevet: **11.11.2009**
(21) Numéro de dépôt: 07731289.0
(22) Date de dépôt: 12.04.2007
(51) Int. Cl.: H01S 3/00, G02F 1/35

(54) **DISPOSITIF POUR LA PROGRAMMATION EN AMPLITUDE ET EN PHASE D'IMPULSIONS LUMINEUSES LONGUES A BANDE SPECTRALE ETROITE A PARTIR D'UN MODULATEUR D'IMPULSIONS LUMINEUSES BREVES A LARGE BANDE SPECTRALE.**
VORRICHTUNG ZUR AMPLITUDEN- UND PHASENPROGRAMMIERUNG VON LANGEN LICHTIMPULSEN MIT SCHMALEM SPEKTRALBAND BEGINNEND VON EINEM MODULATOR KURZER LICHTIMPUSLE MIT GROSSEM SPEKTRALBAND
DEVICE FOR AMPLITUDE AND PHASE PROGRAMMING OF LONG LIGHT PULSES WITH NARROW SPECTRAL BAND STARTING FROM A MODULATOR OF SHORT LIGHT PULSES WITH WIDE SPECTRAL BAND.

(30) Priorité: 21.04.2006 FR 0603526
(43) Date de publication de la demande: 07.01.2009
(73) Titulaire: Fastlite, 75013 Paris (FR)
(72) Inventeur: FORGET, Nicolas, F-91400 Orsay (FR); TOURNOIS, Pierre, F-06800 Cagnes sur Mer (FR)
(74) Mandataire: de Saint-Palais, Arnaud Marie
(86) Numéro de dépôt international: PCT/FR2007/000621
(87) Numéro de publication internationale: WO 2007/122313

(56) Documents cités:
- FR-A1- 2 795 188
- LASER COHERENCE CONTROL: TECHNOLOGY AND APPLICATIONS, vol. 1870, 21 janvier 1993 (1993-01-21), pages 34-46, XP002404846 Proceedings of the SPIE - The International Society for Optical Engineering USA ISSN: 0277-786X
- RAOULT F ET AL: "EFFICIENT GENERATION OF NARROW-BANDWIDTH PICOSECOND PULSES BY FREQUENCY DOUBLING OF FEMTOSECOND CHIRPED PULSES" OPTICS LETTERS, OSA, OPTICAL SOCIETY OF AMERICA, WASHINGTON, DC, US, vol. 23, no. 14, 15 juillet 1998 (1998-07-15), pages 1117-1119, XP000783057 ISSN: 0146-9592
- RIBEYRE K ET AL: "ALL-OPTICAL PROGRAMMABLE SHAPING OF NARROW-BAND NANOSECOND PULSES WITH PICOSECOND ACCURACY BY USE OF ADAPTED CHRIPS AND QUADRATIC NONLINEARITIES" OPTICS LETTERS, OSA, OPTICAL SOCIETY OF AMERICA, WASHINGTON, DC, US, vol. 26, no. 15, 1 août 2001 (2001-08-01), pages 1173-1175, XP001110589 ISSN: 0146-9592

## Description

La présente invention concerne un dispositif pour la programmation en amplitude et en phase d'impulsions lumineuses longues à bande spectrale étroite à partir d'un modulateur d'impulsions lumineuses brèves à large bande spectrale.

Elle a plus particulièrement pour objet l'adaptation d'un façonneur programmable d'impulsions lumineuses ultra brèves à large bande spectrale, à des impulsions lumineuses longues à bande spectrale étroite.

D'une façon générale, on sait que les façonneurs d'impulsions laser ultra brèves à large bande spectrale tels que les masques ou filtres programmables spatiaux (ex : cristaux liquides) placés dans le plan focal d'une ligne à retard optique à dispersion nulle et les filtres acousto-optiques dispersifs programmables, façonnent les impulsions dans le domaine spectral en modifiant, de manière programmable, l'amplitude et la phase de chaque fréquence (ou de chaque longueur d'onde) contenue dans la bande spectrale des impulsions. Ceci permet un façonnage sur une échelle de temps allant de la femtoseconde à quelques picosecondes.

Quant aux modulateurs temporels électro-optiques, tels les interféromètres de Mach-Zehnder programmables, réalisés en optique intégrée, ils ne permettent de façonner, dans le temps, que des impulsions longues de l'ordre de quelques nanosecondes à bande spectrale très étroite.

Pour des temps de programmation intermédiaires compris entre 10 picosecondes et 10 nanosecondes environ, il n'existe pas de système de façonnage programmable d'impulsions laser, les systèmes spectraux ne présentant pas une excursion de programmation temporelle suffisante et les systèmes temporels ne présentant pas une bande passante de programmation suffisante. Il est toutefois fait référence au document FR 2 795 188 qui décrit un procédé de mise en forme d'impulsions longues.

L'objet de l'invention a donc plus particulièrement pour but de combler cette lacune en proposant un dispositif d'adaptation d'un façonneur programmable d'impulsions lumineuses ultra brèves à large bande spectrale, à des impulsions lumineuses longues à bande spectrale étroite, dont la durée est comprise entre 10 picosecondes et 10 nanosecondes.

La présente invention consiste à insérer un façonneur d'impulsions lumineuses à large bande spectrale entre deux mélangeurs optiques non linéaires, un dispositif de dispersion linéaire étant placé en amont du premier mélangeur et les impulsions lumineuses longues, à bande spectrale étroite, portant la modulation, en amplitude et en phase, introduite par le susdit façonneur d'impulsions lumineuses à large bande spectrale, étant obtenues à la sortie du deuxième mélangeur optique non linéaire.

L'invention propose à cet effet un dispositif pour l'adaptation d'un façonneur programmable d'impulsions lumineuses ultra brèves à large bande spectrale, à des impulsions lumineuses longues à bande spectrale étroite, comprenant :
- une source laser d'impulsions ultra brèves à large bande spectrale,
- un dispositif de dispersion des impulsions ultra brèves issues de la susdite source laser,
- un premier mélangeur optique non linéaire pour mélanger les impulsions longues modulées issues du susdit dispositif de dispersion avec des signaux longs quasi monochromatiques issus d'un laser de pompe à fréquence pure,
- un façonneur d'impulsions lumineuses à large bande spectrale placé sur une première voie du signal émergeant du susdit premier mélangeur optique non linéaire à la fréquence de la susdite source laser d'impulsions ultra brèves,
- un second mélangeur optique non linéaire pour mélanger la voie issue du susdit façonneur et une seconde voie émergeant du susdit premier mélangeur optique non linéaire à une fréquence correspondant à la différence ou à la somme des fréquences respectivement du susdit laser de pompe à fréquence pure et de la susdite source laser d'impulsions brèves.

Ainsi, le signal de sortie du susdit second mélangeur optique non linéaire est un signal dont la fréquence centrale est égale à celle du susdit laser de pompe ; la durée de ce signal de sortie est égale à la durée d'allongement en sortie du susdit dispositif de dispersion ; la bande spectrale de ce signal de sortie est la bande spectrale résultante donnée par la bande spectrale des susdites impulsions longues issues du dispositif de dispersion affectée du rapport des durées correspondant d'une part à la durée selon laquelle on peut moduler, en amplitude et en phase, une impulsion à l'aide du susdit façonneur, et d'autre part à la durée d'allongement en sortie du susdit dispositif de dispersion.

Par conséquent, ce signal de sortie qui n'est plus modulé linéairement en fréquence dans la bande spectrale des impulsions issues de la source laser d'impulsions brèves, porte, dans la bande spectrale réduite, précédemment définie, la modulation, en amplitude et en phase, introduite par le susdit façonneur d'impulsions lumineuses à large bande.

La fréquence de la susdite seconde voie émergeant du premier mélangeur optique non linéaire, correspond à la différence ou à la somme des fréquences, respectivement du susdit laser de pompe à fréquence quasi-monochromatique et de la susdite source laser d'impulsions lumineuses brèves.

En effet, lorsque la fréquence du susdit laser de pompe est supérieure à la fréquence de la source laser d'impulsions brèves, la fréquence de la seconde voie émergeant du premier mélangeur correspond à la différence des fréquences respectivement du susdit laser de pompe à fréquence quasi-monochromatique et de la susdite source laser d'impulsions lumineuses brèves ; dans ce cas, la pente de modulation des impulsions longues est de signe contraire à celle des impulsions longues injectées dans le premier mélangeur par la source laser d'impulsions brèves.

Réciproquement, la fréquence de la seconde voie émergeant du premier mélangeur correspond à la somme des fréquences respectivement du susdit laser de pompe à fréquence quasi-monochromatique et de la susdite source laser d'impulsions lumineuses brèves, si la fréquence du susdit laser de pompe est inférieure à la fréquence de la source laser d'impulsions brèves ; dans ce cas, la pente de modulation des impulsions longues est dé même signe que celle des impulsions longues injectées dans le premier mélangeur par la source laser d'impulsions brèves.

Avantageusement, le susdit dispositif de dispersion des impulsions ultra brèves issues de la source laser pourra être une fibre optique dispersive ou une paire de réseaux optiques parallèles.

Avantageusement, le susdit façonneur d'impulsions lumineuses à large bande spectrale pourra être un modulateur spatial d'amplitude et de phase placé dans le plan focal d'une ligne à retard optique à dispersion nulle dite ligne 4-f, ou il pourra être également un filtre acousto-optique dispersif programmable.

Un mode d'exécution de l'invention sera décrit ci-après, à titre d'exemple non limitatif, avec référence aux dessins annexés dans lesquels :
La figure 1 est une représentation schématique du dispositif selon une première version de l'invention,
La figure 2 est un diagramme temps/fréquence correspondant à la première version de l'invention,
La figure 3 est une représentation schématique du dispositif selon une deuxième version de l'invention, et
La figure 4 est un diagramme temps/fréquence correspondant à la deuxième version de l'invention.

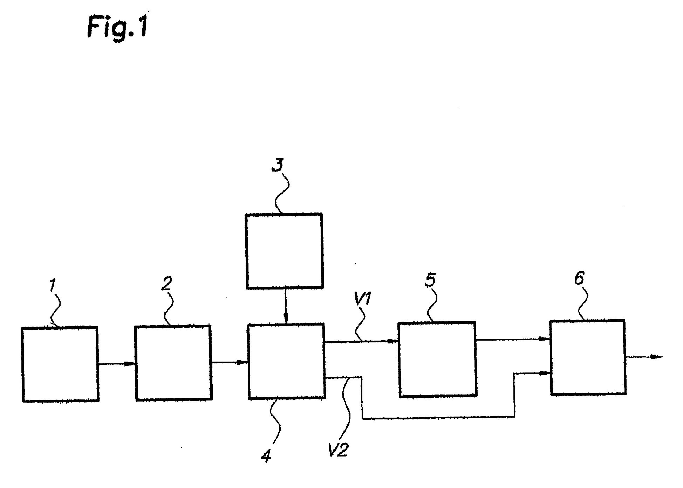

Dans l'exemple représenté sur la figure 1 :
- une source laser 1 d'impulsions ultra brèves à large bande spectrale délivre des signaux à la fréquence ν₁, de bande spectrale B₁ et de durée brève voisine de 1/B₁,
- en aval de la susdite source laser 1, un dispositif de dispersion 2 des impulsions ultra brèves issues de la source laser 1, lequel dispositif de dispersion 2 délivre des signaux à la fréquence ν₁, de bande spectrale B₁ et de durée T₂,
- en aval du susdit dispositif de dispersion 2, un premier mélangeur optique non linéaire 4, lequel mélangeur 4 effectue le mélange des impulsions longues issues du susdit dispositif de dispersion 2 avec des signaux longs quasi monochromatiques de durée T₀ supérieure à T₂ issus d'un laser de pompe 3 à fréquence pure ν₂, la fréquence de pompage ν₂ étant supérieure à la fréquence ν₁ de la source laser 1,
- en aval du susdit premier mélangeur optique non linéaire 4, un façonneur d'impulsions lumineuses à large bande spectrale 5 placé sur une première voie V₁ du signal émergeant du susdit premier mélangeur optique non linéaire 4 à la fréquence ν₁ de la susdite source laser d'impulsions ultra brèves 1,
- en aval du susdit façonneur d'impulsions lumineuses à large bande spectrale 5, un second mélangeur optique non linéaire 6, lequel mélangeur 6 effectue le mélange des impulsions longues de fréquence ν₁, de durée T₂ issues du susdit façonneur d'impulsions lumineuses à large bande spectrale 5, et des impulsions émergeant selon la voie V₂ du susdit premier mélangeur optique 4 de fréquence ν₃ = ν₂ - ν₁.

Ainsi, en sortie du susdit second mélangeur optique non linéaire 6, le signal de sortie est un signal de fréquence ν₂, de bande spectrale B₂ et de longueur T₂ qui n'est plus modulé linéairement en fréquence dans la bande B₁, mais porte, dans la bande B₂, la modulation, en amplitude et en phase, introduite par le façonneur d'impulsions lumineuses à large bande.

Si T₁ est le temps sur lequel on peut moduler en amplitude et en phase, une impulsion lumineuse de bande B₁ à l'aide du façonneur d'impulsions à large bande, le nombre de points de programmation indépendants est : N = B₁T₁.
La quantité d'information, et donc ce nombre de points, étant conservés dans le dispositif représenté sur la figure 1, la bande de modulation résultante B₂ est donnée par : B₂ = B₁T₁/T₂.
Cette bande est beaucoup plus étroite que B₁, puisque T₂ est de l'ordre de la nanoseconde alors que T₁ est de l'ordre de la picoseconde.
La capacité de modulation du façonneur d'impulsions brèves à large bande a donc été transférée à des signaux longs à bande étroite.

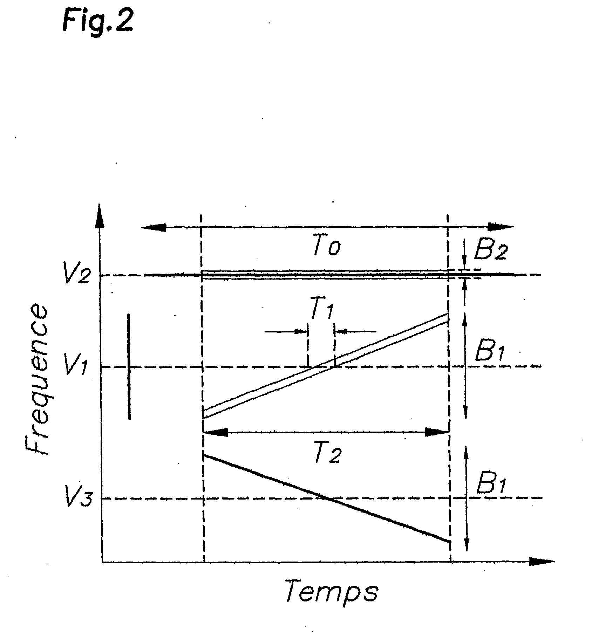

Dans l'exemple représenté sur la figure 2, un diagramme temps/fréquence correspondant à la première version de l'invention, indique schématiquement la bande spectrale des signaux lumineux et leur durée aux trois susdites fréquences précédemment citées, à savoir ν₁, ν₂, ν₃, correspondant respectivement aux signaux lumineux de la source laser 1, de la source laser 3 et en sortie du premier mélangeur 4 selon la susdite voie V₂.

Ainsi, les impulsions lumineuses ultra brèves à large bande spectrale issues de la susdite source laser 1 ont une fréquence ν₁, une bande spectrale large B₁, et une durée ultra courte de l'ordre de 1/B₁.
Les impulsions lumineuses issues du susdit dispositif de dispersion ont une fréquence ν₁, une bande spectrale large B₁, une durée allongée T₂ et une pente croissante (ou décroissante) de modulation de la fréquence en fonction du temps.

Les impulsions lumineuses longues quasi monochromatiques issues de la susdite source laser 3 ont une fréquence ν₂ supérieure à la fréquence ν₁ et une durée longue T₀ supérieure à T₂.

Les impulsions lumineuses issues du susdit premier mélangeur optique 4, selon la voie V_{2,} ont une fréquence ν₃, égale à ν₂ - ν₁, une bande spectrale large B₁, et une durée T₂.

A la sortie du susdit dispositif de dispersion, la pente de modulation du signal optique, issu du laser 1, à la fréquence ν₁, de bande spectrale B₁, de durée T₂ étant croissante (ou décroissante), la pente de modulation du signal optique, issu du premier mélangeur optique 4 selon la voie V₂, à la fréquence ν₃, de bande spectrale B₁, de durée T₂, sera décroissante (ou croissante).

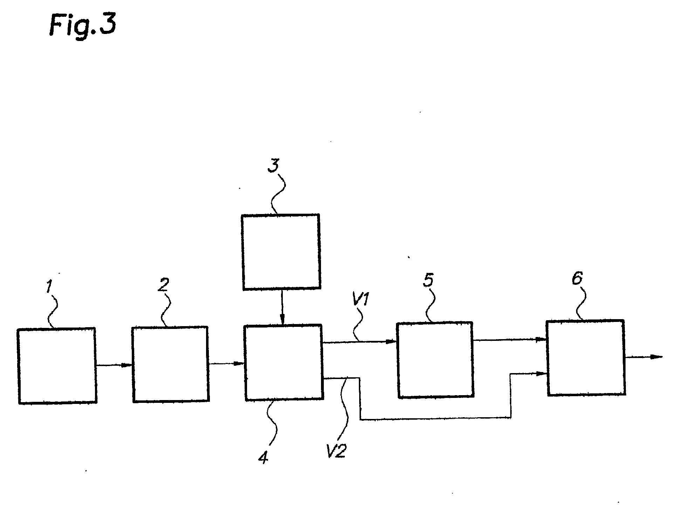

Dans l'exemple représenté sur la figure 3 :
- une source laser 1 d'impulsions ultra brèves à large bande spectrale délivre des signaux à la fréquence ν₁, de bande spectrale B₁ et de durée brève voisine de 1/B₁,
- en aval de la susdite source laser 1, un dispositif de dispersion 2 des impulsions ultra brèves issues de la source laser 1, lequel dispositif de dispersion 2 délivre des signaux à la fréquence v₁, de bande spectrale B₁ et de durée T₂,
- en aval du susdit dispositif de dispersion 2, un premier mélangeur optique non linéaire 4, lequel mélangeur 4 effectue le mélange des impulsions longues issues du susdit dispositif de dispersion 2 avec des signaux longs quasi monochromatiques de durée T₀ supérieure à T₂ issus d'un laser de pompe 3 à fréquence pure ν₂, la fréquence de pompage ν₂ étant inférieure à la fréquence ν₁ de la source laser 1,
- en aval du susdit premier mélangeur optique non linéaire 4, un façonneur d'impulsions lumineuses à large bande spectrale 5 placé sur une première voie V₁ du signal émergeant du susdit premier mélangeur optique non linéaire 4 à la fréquence ν₁ de la susdite source laser d'impulsions ultra brèves 1,
- en aval du susdit façonneur d'impulsions lumineuses à large bande spectrale 5, un second mélangeur optique non linéaire 6, lequel mélangeur 6 effectue le mélange des impulsions longues de fréquence ν₁, de durée T₂ issues du susdit façonneur d'impulsions lumineuses à large bande spectrale 5, et des impulsions émergeant selon la voie V₂ du susdit premier mélangeur optique 4 de fréquence ν₃ = ν₂ + ν₁.

Ainsi, en sortie du susdit second mélangeur optique non linéaire 6, le signal de sortie est un signal de fréquence ν₂, de bande spectrale B₂ et de longueur T₂ qui n'est plus modulé linéairement en fréquence dans la bande B₁, mais porte, dans la bande B₂, la modulation, en amplitude et en phase, introduite par le façonneur d'impulsions lumineuses à large bande.

Si T₁ est le temps sur lequel on peut moduler en amplitude et en phase, une impulsion lumineuse de bande B₁ à l'aide du façonneur d'impulsions à large bande, le nombre de points de programmation indépendants est : N = B₁T₁.
La quantité d'information, et donc ce nombre de points, étant conservés dans le dispositif représenté sur la figure 1, la bande de modulation résultante B₂ est donnée par : B₂ = B₁T₁/T₂.
Cette bande est beaucoup plus étroite que B₁, puisque T₂ est de l'ordre de la nanoseconde alors que T₁ est de l'ordre de la picoseconde.
La capacité de modulation du façonneur d'impulsions brèves à large bande a donc été transférée à des signaux longs à bande étroite.

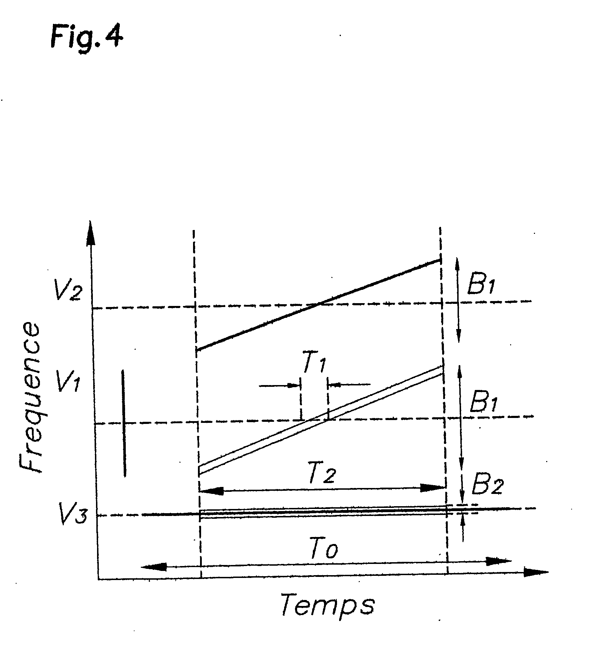

Dans l'exemple représenté sur la figure 4, un diagramme temps/fréquence correspondant à la deuxième version de l'invention, indique schématiquement la bande spectrale des signaux lumineux et leur durée aux trois susdites fréquences précédemment citées, à savoir ν₁ ν₂, ν₃, correspondant respectivement aux signaux lumineux de la source laser 1, de la source laser 3 et en sortie du premier mélangeur 4 selon la susdite voie V₂.

Ainsi, les impulsions lumineuses ultra brèves à large bande spectrale issues de la susdite source laser 1 ont une fréquence ν₁, une bande spectrale large B₁, et une durée ultra courte de l'ordre de 1/B₁.

Les impulsions lumineuses issues du susdit dispositif de dispersion ont une fréquence ν₁, une bande spectrale large B₁, une durée allongée T₂ et une pente croissante (ou décroissante) de modulation de la fréquence en fonction du temps.

Les impulsions lumineuses longues quasi monochromatiques issues de la susdite source laser 3 ont une fréquence ν₂ inférieure à la fréquence ν₁ et une durée longue T₀ supérieure à T₂.

Les impulsions lumineuses issues du susdit premier mélangeur optique 4, selon la voie V₂, ont une fréquence ν₃, égale à ν₂ + ν₁, une bande spectrale large B₁, et une durée T₂.

A la sortie du susdit dispositif de dispersion, la pente de modulation du signal optique, issu du laser 1, à la fréquence ν₁, de bande spectrale B₁, de durée T₂ étant croissante (ou décroissante), la pente de modulation du signal optique, issu du premier mélangeur optique 4 selon la voie V₂, à la fréquence ν₃, de bande spectrale B₁, de durée T₂, sera également croissante (ou décroissante).

Ainsi, le signal de sortie du second mélangeur optique non linéaire 6 est un signal dont la fréquence centrale ν₂ est équivalente à celle du laser de pompe 3 ; la durée de ce signal de sortie est égale à la durée T₂ d'allongement en sortie du susdit dispositif de dispersion 2 ; la bande spectrale B₂ de ce signal de sortie est la bande spectrale résultante donnée par la bande spectrale B₁ des susdites impulsions longues issues du dispositif de dispersion 2 affectée du rapport T₁/T₂ des durées correspondant d'une part à la durée T₁ selon laquelle on peut moduler, en amplitude et en phase, une impulsion à l'aide du façonneur 5, et d'autre part à la durée d'allongement T₂ en sortie du dispositif de dispersion 2.

La capacité de modulation du façonneur 5 d'impulsions brèves à large bande a donc été transférée à des signaux longs à bande étroite.

## Revendications

1. Dispositif pour la programmation en amplitude et en phase d'impulsions lumineuses longues c'est à dire ayant une durée comprise entre 10 ps et 10 ns, et à bande spectrale étroite, comprenant :
- une source laser (1) d'impulsions ultra brèves à large bande spectrale,
- un dispositif de dispersion (2) des impulsions ultra brèves issues de la susdite source laser (1),
- un premier mélangeur optique (4) non linéaire pour mélanger les impulsions dispersées issues du susdit dispositif de dispersion (2) avec des impulsions quasi monochromatiques de durée supérieure à celle des impulsions dispersées et issues d'un laser de pompe (3) à fréquence pure,
- un façonneur d'impulsions lumineuses (5) à large bande spectrale placé sur une première voie (V₁) du signal émergeant du susdit premier mélangeur optique (4) non linéaire à la fréquence de la susdite source laser (1) d'impulsions ultra brèves,
- un second mélangeur optique (6) non linéaire pour mélanger la voie issue du susdit façonneur (5) et une seconde voie (V₂) émergeant du susdit premier mélangeur optique (4) non linéaire à une fréquence correspondant à la différence ou à la somme des fréquences respectivement susdit laser de pompe (3) à fréquence pure et de la susdite source laser (1) d'impulsions brèves.

2. Dispositif selon la revendication 1,
**caractérisé en ce que** la fréquence de la susdite seconde voie (V₂) émergeant du premier mélangeur optique (4) correspond à la différence des fréquences respectivement du susdit laser de pompe (3) à fréquence pure et de la susdite source laser (1) d'impulsions lumineuses brèves, si la fréquence du susdit laser de pompe (3) est supérieure à la fréquence de la source laser (1) d'impulsions brèves.

3. Dispositif selon la revendication 1,
**caractérisé en ce que** la fréquence de la susdite seconde voie (V₂) émergeant du premier mélangeur optique (4) correspond à la somme des fréquences respectivement du susdit laser de pompe (3) à fréquence pure et de la susdite source laser (1) d'impulsions lumineuses brèves, si la fréquence du susdit laser de pompe (3) est inférieure à la fréquence de la source laser (1) d'impulsions brèves.

4. Dispositif selon la revendication 1,
**caractérisé en ce que** le susdit dispositif de dispersion (2) des impulsions ultra brèves issues de la source laser (1) est une fibre optique dispersive.

5. Dispositif selon la revendication 1,
**caractérisé en ce que** le susdit dispositif de dispersion (2) des impulsions ultra brèves issues de la source laser (1) est une paire de réseaux optiques.

6. Dispositif selon la revendication 1,
**caractérisé en ce que** le susdit façonneur (5) d'impulsions lumineuses à large bande spectrale est un modulateur spatial d'amplitude et de phase placé dans le plan focal d'une ligne à retard optique non dispersive dite ligne 4-f.

7. Dispositif selon la revendication 1,
**caractérisé en ce que** le susdit façonneur (5) d'impulsions lumineuses à large bande spectrale est un filtre acousto-optique dispersif programmable.

## Claims

1. A device for amplitude and phase programming of long light pulses, i.e. having a duration comprised between 10 ps and 10 ns, and with a narrow spectral band comprising :
- a laser source (1) of ultra-short wide spectral band pulses,
- a device (2) for dispersion of ultra-short pulses output from said laser source (1),
- a first nonlinear optical mixer (4) to mix the dispersed pulses coming from said dispersion device (2) with quasi-monochromatic pulses (3) with a duration greater than the one of dispersed pulses and coming from a pure frequency pump laser (3),
- a generator of wide spectral band light pulses (5) placed on a first channel (V₁) of the signal emerging from said first nonlinear optical mixer (4) at the frequency of said laser source (1) of ultra-short pulses,
- a second nonlinear optical mixer (6) to mix the channel output from said generator (5) and a second channel (V₂) emerging from said first nonlinear optical mixer (4) at a frequency corresponding to the difference or the sum of the frequencies of said pure frequency pump laser (3) and from said laser source (1) of short pulses, respectively.

2. The device according to claim 1,
**characterized in that** the frequency of said second channel (V₂) emerging from said first optical mixer (4) corresponds to the difference in the frequencies of said pure frequency pump laser (3) and from said laser source (1) of short light pulses, respectively, if the frequency of said pump laser (3) is greater than the frequency of the laser source (1) of short pulses.

3. The device according to claim 1,
**characterized in that** the frequency of said second channel (V₂) emerging from said first optical mixer (4) corresponds to the sum of the frequencies of said pure frequency pump laser (3) and of said laser source (1) of short light pulses, respectively, if the frequency of said pump laser (3) is less than the frequency of the laser source (1) of short pulses.

4. The device according to claim 1,
**characterized in that** said device (2) for dispersion of ultra-short pulses output from the laser source (1) is a dispersive optical fiber.

5. The device according to claim 1,
**characterized in that** said device (2) for dispersion of ultra-short pulses output from the laser source (1) is a pair of optical networks.

6. The device according to claim 1,
**characterized in that** said generator (5) of wide spectral band light pulses is a spatial amplitude and phase modulator placed in the focal plane of a non-dispersive optical delay line called line 4-f.

7. The device according to claim 1,
**characterized in that** said generator (5) of wide spectral band light pulses is a programmable dispersive acousto-optical filter.

## Patentansprüche

1. Vorrichtung zur Programmierung in Amplitude und Phase von langen Lichtimpulsen, d. h. mit einer Dauer von 10 ps bis 10 ns, Grenzen eingeschlossen, und mit schmaler Spektralbande,
umfassend:
- einen Quell-Laser (1) von ultrakurzen Impulsen mit breiter Spektralbande,
- eine Streuvorrichtung (2) der von dem oben genannten Quell-Laser (1) ausgegebenen ultrakurzen Impulse,
- einen ersten optischen nicht linearen Mischer (4) zum Mischen der aus der oben genannten Streuvorrichtung (2) ausgegebenen gestreuten Impulse mit quasi monochromatischen, aus einem Pumplaser (3) mit reiner Frequenz ausgegebenen Impulse von einer Dauer, die über derjenigen der gestreuten Impulse liegt,
- einen Formgeber von Lichtimpulsen (5) mit breiter Spektralbande, der auf einer ersten Spur (V₁) des Signals angeordnet ist, das aus dem oben genannten ersten optischen nicht linearen Mischer (4) bei der Frequenz des oben genannten Quell-Lasers (1) von ultrakurzen Impulsen austritt,
- einen zweiten nicht linearen optischen Mischer (6) zum Mischen der aus dem oben genannten Formgeber (5) ausgegebenen Spur und einer zweiten Spur (V₂), die aus dem oben genannten ersten nicht linearen optischen Mischer (4) bei einer Frequenz austritt, die der Differenz bzw, der Summe der Frequenzen des oben genannten Pumplasers (3) mit reiner Frequenz und des oben genannten Quell-Lasers (1) von kurzen Impulsen entspricht.

2. Vorrichtung nach Anspruch 1,
**dadurch gekennzeichnet, dass** die Frequenz der oben genannten zweiten Spur (V₂), die aus dem ersten optischen Mischer (4) austritt, der Differenz der jeweiligen Frequenzen des oben genannten Pumplasers (3) mit reiner Frequenz und des oben genannten Quell-Lasers (1) von kurzen Lichtimpulsen entspricht, wenn die Frequenz des oben genannten Pumplasers (3) größer ist als die Frequenz des Quell-Lasers (1) von kurzen Impulsen.

3. Vorrichtung nach Anspruch 1,
**dadurch gekennzeichnet, dass** die Frequenz der oben genannten zweiten Spur (V₂), die aus dem ersten optischen Mischer (4) austritt, der Summe der jeweiligen Frequenzen des oben genannten Pumplasers (3) mit reiner Frequenz und des oben genannten Quell-Lasers (1) von kurzen Lichtimpulsen entspricht, wenn die Frequenz des oben genannten Pumplasers (3) kleiner ist als die Frequenz des Quell-Laser (1) von kurzen Impulsen.

4. Vorrichtung nach Anspruch 1,
**dadurch gekennzeichnet, dass** die oben genannte Streuvorrichtung (2) der aus dem Quell-Laser (1) ausgegebenen ultrakurzen Impulse eine optische Streufaser ist.

5. Vorrichtung nach Anspruch 1,
**dadurch gekennzeichnet, dass** die oben genannte Streuvorrichtung (2) der aus dem Quell-Laser (1) ausgegebenen ultrakurzen Impulse ein Paar von optischen Netzen ist.

6. Vorrichtung nach Anspruch 1,
**dadurch gekennzeichnet, dass** der oben genannte Formgeber (5) von Lichtimpulsen mit breiter Spektralbande ein Raummodulator von Amplitude und Phase ist, der in der Brennpunktebene einer nicht streuenden optischen nacheilenden Linie, die Linie 4-f genannt wird, angeordnet ist.

7. Vorrichtung nach Anspruch 1,
**dadurch gekennzeichnet, dass** der oben genannte Formgeber (5) von Lichtimpulsen mit breiter Spektralbande ein programmierbarer optisch-akustischer Streufilter ist.
